# EUROPEAN PATENT APPLICATION

(11) **EP 4 814 883 A1**
(43) Date of publication of application: **30.09.2026**
(21) Application number: 25166912.3
(22) Date of filing: 28.03.2025
(51) Int. Cl.: G06V 10/26, G06V 10/62, G06V 10/774, G06V 10/82, G06V 20/69

(54) **METHODS, SYSTEMS AND MEDIUM FOR MORPHOLOGICAL PROFILING OF LIVE CELLS**

(71) Applicant: Sartorius BioAnalytical Instruments, Inc., Bohemia, NY 11716 (US)
(72) Inventor: Forsgren, Edvin, 90656 Umeå (SE); Lovell, Gillian, St Albans, AL3 4TZ (GB); Jonsson, Pär, 90360 Umeå (SE); Trygg, Johan, 90187 Umeå (SE)
(74) Representative: Müller-Boré & Partner Patentanwälte PartG mbB

(57) **Abstract**

Summarizing the invention, a computer-implemented method for morphological profiling is provided. The method comprises receiving a set of label-free images captured at a plurality of timepoints for a plurality of samples in a respective plurality of wells, wherein each sample comprises cells and a respective agent; performing, on the set of label-free images, cell segmentation to detect at least part of the cells and cell classification to categorize the at least part of the cells as live or dead; determining, for each timepoint of the plurality of timepoints and for each sample of the plurality of samples, cell features for the live cells using at least the set of label-free images; training at least one machine learning model to output at least one numerical value associated with the morphological profiling, wherein each input of the at least one machine learning model is derived from the cell features.

## Description

### Technical Field

The following description relates to morphological profiling of live cells.

### Background

Morphological profiling of cells involves extracting quantifiable information from cell morphology, e.g. to detect or predict modifications to the cells caused by a chemical compound or other perturbance, including genetic modifications. Conventionally, morphological profiling is carried out by fixing the cell state then staining with one or more substances (such as dyes) and analyzing a microscopic image that captures the fixed cell.

### Summary

It is an object of the invention to improve morphological profiling, in particular in terms of accuracy, such as accuracy in identifying the biochemical interaction between a cell and an agent, such as a chemical compound.

The achievement of this object in accordance with the invention is set out in the independent claims. Further developments of the invention are the subject matter of the dependent claims.

According to one aspect, a first computer-implemented method for morphological profiling is provided. The first computer-implemented method comprises:
- receiving a set of label-free images captured at a plurality of timepoints for a plurality of samples in a respective plurality of wells, wherein each sample comprises cells and a respective agent;
- performing, on the set of label-free images, cell segmentation to detect at least part of the cells and cell classification to categorize the at least part of the cells as live or dead;
- determining, for each timepoint of the plurality of timepoints and for each sample of the plurality of samples, cell features for the live cells using at least the set of label-free images;
- training at least one machine learning model to output at least one numerical value associated with the morphological profiling, wherein each input of the at least one machine learning model is derived from the cell features.

The method is computer-implemented in that it is carried out by one or more computing devices. According to the present disclosure, a computing device may comprise at least one memory and at least one processor. A computing device may also comprise one or more input/output units. Exemplarily, a computing device may be a distributed computing system, e.g. a computing network.

The method is a method for morphological profiling. Indeed, the method facilitates identifying or predicting which effect, among a plurality of known effects, an unknown agent has on living cells.

The method comprises receiving a set of label-free images captured at a plurality of timepoints. Specifically, the images may be microscopic images, i.e. images captured using a microscope. A chronologically ordered sequence of the plurality of timepoints may be referred to as "time sequence". The time separation between the timepoints may be the same between all pairs of timepoints or may vary. The time separation may be in the order of minutes or hours. For instance, images may be acquired every few hours (e.g. less than 5 hours, such as 2 hours) over the course of few days (e.g. less than 5 days, such as 3 days).

The set of label-free images shows a plurality of samples contained in a respective plurality of wells, i.e. each sample is contained in its own well. In particular, for each timepoint, there are images of the plurality of samples. In other words, the set of images may comprise a plurality of subsets of images, wherein each subset of images corresponds to a respective timepoint and wherein each subset of images comprises images of the plurality of samples. Thus, there is at least one image for each sample and for each timepoint.

In some examples, the images in each subset of images may be in a one-to-one correspondence with the plurality of samples, i.e. there may be one label-free image for each sample. In other examples, the plurality of images in each subset of images may be in a many-to-one correspondence with the plurality of samples, i.e. there may be more than one image for each sample, e.g. of different parts of the sample.

The plurality of wells may be comprised in one or more vessels. Exemplarily, a vessel may be a microplate, which is a plate containing a plurality of wells, usually arranged in a matrix such as a rectangular matrix. Accordingly, each sample may be in one well of the microplate(s). A microplate may comprise between 6 and 1536 sample wells, in particular between 6 and 384 sample wells. The capacity of each well may be between about 3 mL and about 25 µL.

An exemplary microplate is the Incucyte^{®} Imagelock 96-well microplate by Sartorius. This vessel contains markings which enable accurate image registration (taking an image at the exact same location at each acquisition, which improves cell tracking accuracy). Other examples of microplates may include 6, 12, 24, 48, 96 and 384-well plates produced by Corning, CytoOne, Eppendorf, Greiner, IBIDI, Iwaki, Matrix, MatTek, Nunc, Revvity, Sarstedt, S-BIO, TPP.

Generally, a sample comprises cells and an agent. In particular, the cells may be in a cell suspension, which, thus, comprises cells and a cell culture medium. The various samples of the plurality of samples comprise the same type or types of cells. In other words, the cell content of each sample is the same, so that samples could not be distinguished by the cells they contain. In some cases, the samples contain only one cell type while in other cases the samples contain a co-culture comprising two or more cell types. For instance, the samples comprise cells coming from a given cell culture.

Examples of cell types may be cell lines. A cell line particularly defines a population of cells that can be maintained in culture for an extended period of time, retaining stability of certain phenotypes and functions; cell lines are usually clonal, meaning that the entire population originated from a single common ancestor cell. Examples of cell lines include but are not limited to CHO, HEK293, A549, U2OS, HeLa, MCF-7, PC3, HepG2. As discussed above, the images show the plurality of samples, and, more specifically, the images show the cells comprised in the samples. In some cases, all cells in a sample may be captured in the images (in one image or collectively in a plurality of images), while in other cases only a fraction of the cells in a sample may be captured in the images.

The images are such that the cells captured in the images comprise live cells, in particular because the image acquisition is non-perturbing to the cells. In other words, the images have been obtained with techniques that do not kill cells. There may be dead cells in the images, e.g. due to the effect of the agents, but not due to the imaging.

In particular, the images are label-free images. Label-free images are images of samples that contain no labeling substances. In other words, no labeling substances have been added to the samples prior to or during imaging. Labeling substances, such as dyes, are substances that label (e.g. fluorescently) cell organelles or substructures.

Exemplarily, the label-free images may be phase-contrast images, i.e. obtained with phase-contrast microscopy. Phase-contrast microscopy is a non-destructive technique that, thus, enables living cells in a culture to be visualized in their natural state. This technique particularly is based on the fact that different sample structures (e.g. different components of the cells) have different densities, and, consequently, different refractive indices. The difference in the refractive indices causes phase shifts of the light waves that pass through the sample structures, and these phase shifts are converted into differences in the waves' amplitude that can be detected by the human eye. The phase-contrast images specifically are in greyscale.

In other examples, the label-free images may be bright-field images.

As mentioned, each sample contains an agent. An agent is a substance that could affect the cells; in particular, an agent could have a biochemical interaction with the cells. An agent may be seen as a perturbation for the cells. An agent may be a chemical compound, an antibody or a genetic modifier.

Since there is a plurality of samples and each sample contains an agent, there is a plurality of agents. At least two agents of the plurality of agents may be different from each other. In other words, the plurality of samples may comprise at least two samples having two respective different agents. For instance, a first sample may comprise a first agent having a first biochemical interaction with the cells and a second sample may comprise a second agent, different from the first agent, which does not have the first biochemical interaction with the cells.

A biochemical interaction between an agent and the cells may be the process by which the compound functions to produce a pharmacological effect. In this context, a biochemical interaction may be referred to also as "mechanism of action" (MOA).

Biochemical interactions may be of two sorts, agonist (the agent activates a receptor or a molecule located on the surface of the cell or within the cell) or antagonist (the agent inhibits a receptor or a molecule located on the surface of the cell or within the cell). Examples of types of biochemical interactions include but are not limited to AKT inhibition, HDAC inhibition, MAPK inhibition, CDK inhibition, PARP inhibition and TUB inhibition.

In a particular example, the plurality of samples may comprise a positive control sample comprising the cells and a positive control agent, wherein the positive control agent is configured to have a given biochemical interaction with the cells; and a negative control sample comprising the cells and a negative control agent, wherein the negative control agent is configured not to have any biochemical interaction with the cells. In other words, the positive control agent represents a given biochemical interaction with the cells and the negative control agent represents no biochemical interaction with the cells.

The positive control agent is known to have a specific type of biochemical interaction, the given biochemical interaction, with the cells. This given biochemical interaction may be a biochemical interaction that is of relevance for the morphological profiling. In particular, the method may facilitate identifying or predicting whether an unknown compound has the given biochemical interaction with the cells.

The negative control agent is known not to have any biochemical interaction with the given type of cells. Exemplarily, the negative control agent is a solvent, such as dimethyl sulfoxide (DMSO).

Exemplarily, the plurality of samples may comprise a plurality of positive control samples and/or a plurality of negative control samples. The positive control agents in the plurality of positive control samples may be identical or may be different compounds that have the same biochemical interaction with the cells in the samples. The same holds for the negative control agents.

Optionally, the plurality of samples may further comprise at least one reference sample, wherein the at least one reference sample comprises the cells and a reference agent, wherein the reference agent is configured to have a reference biochemical interaction with the cells, the reference biochemical interaction being different from the given biochemical interaction. By including one or more reference samples, the specificity of the identification or prediction of the given biochemical interaction is improved, wherein the specificity refers to the capability of determining true negatives.

The method further comprises performing, on the set of label-free images, cell segmentation to detect at least part of the cells and cell classification to categorize the at least part of the cells as live or dead.

The segmentation is the process that recognizes the cells in the images, or, said otherwise, that detects the presence of the cells in the images. Detecting a cell may comprise identifying a region (e.g. a plurality of adjacent pixels) of an image as being the representation of a cell. One or more features of the region may be analyzed to determine whether there is a cell. Exemplarily, cells may be detected by detecting the cell boundaries.

The classification is the process that assigns the cells to a category between live and dead. The cell category may be determined based on characteristics of the cells, such as a fragmented nucleus and/or ruptured membrane, and/or based on a cell death reporter, such as a fluorescent cell death dye that enters only dead cells.

The cell segmentation and cell classification are carried out on one image at the time. In particular, the cell segmentation may be performed first and the cell classification may be performed on the cells detected via the cell segmentation. In some examples, the cell segmentation and cell classification are performed on each image of the set of images.

The cell segmentation may detect only a part of the cells because some cells may escape detection e.g. due to a lack of sufficient contrast. Instead, in other cases, the cell segmentation may detect all cells shown in all images.

Exemplarily, the segmentation and classification may be carried out using one or more machine learning models. A machine learning model may be a neural network, in particular a convolutional neural network. An image of the set of images may be provided as input to the machine learning model. For instance, a label-free image may be represented by a plurality of values on a greyscale, with 0.0 representing white and 1.0 representing black, each value corresponding to a pixel in the image. This plurality of values may be provided as input to the machine learning model, e.g. to the neurons in the input layer of a neural network.

The output provided, e.g. by a machine learning model, for cell segmentation may be a plurality of segmentation masks. A segmentation mask may be a pixel-level representation of portion of a given image, wherein each pixel is labeled to indicate whether it belongs to a cell or the background. In particular, one segmentation mask for each cell may be generated.

The output provided, e.g. by a machine learning model, for cell classification may be one numerical value, e.g. a 0 or a 1, wherein 0 indicates a dead cell and 1 indicates a live cell, or a number between 0 and 1, wherein a number lower than or equal to a certain threshold (e.g. 0.5 or 0.2) indicates a dead cell and number greater than the certain threshold indicates a live cell. For instance, a machine learning model for cell classification may have been trained on label-free and fluorescence images in which the fluorescence occurred from a cell death dye (e.g. Cytotox) which enters only dead cells. After training, the machine learning model may be able to identify dead cells only from label-free images, i.e. without the use of a cell death dye and fluorescence imaging.

In a particular example, the method may further comprise computing a death ratio between the number of dead cells and the total number of detected cells in an image. A measure of cytotoxicity of an agent in a sample may be derived from the death ratio.

As mentioned above, the set of images comprises image for a given sample at the plurality of timepoints. Exemplarily, the death ratio may be computed for each timepoint, and the time evolution of the cytotoxicity may be followed. In another example, the death ratio may be computed only for one or more given timepoints. For instance, the death ratio may be computed for the last timepoint in the time sequence.

The method further comprises determining, for each timepoint of the plurality of timepoints and for each sample of the plurality of samples, cell features for the live cells using at least the set of label-free images.

As discussed above, each sample and, specifically, its cells may be captured in one or more images of the set of images at a given timepoint. Thanks to the cell classification, the cells are divided into live cells and dead cells. The method comprises extracting features relating to cells classified as live, wherein the cell features may be extracted for all live cells or for just a fraction of the live cells. The live cells for which cell features are determined may be referred to as "analyzed live cells".

In this context, "cell features" refer to characteristics of the cells as part of a visual representation, such as an image. In other words, the cell features are derivable from and pertain to the visual representation of the cell. Thus, the cell features may be considered pieces of information about the imaged cells. Examples of features may include, but are not limited to, corners, edges, angles, colors, texture, area, roundness, aspect ratio.

The cell features are determined using at least the set of label-free images, namely at least from the label-free images, e.g. using computer vision techniques. Exemplarily, the images may be pre-processed for the purpose of feature determination. For instance, cell sections may be created from the images based on the segmentation masks, wherein each cell section fully contains one and only one segmentation mask and all cell sections have the same dimension e.g. in terms of pixels.

For a given timepoint, cell features may be extracted from the images for each cell individually. In particular, the same number of features and the same types of features may be determined for each analyzed live cell. The features from the individual cells may then be consolidated to describe the overall state of the sample at the given timepoint.

In a particular example, determining cell features may comprise:
determining, for each timepoint of the plurality of timepoints and for each sample of the plurality of samples, a plurality of sets of single cell features, wherein each set of single cell features relates to one live cell;
determining, for each timepoint of the plurality of timepoints and for each sample of the plurality of samples, a set of sample cell features by combining corresponding single cell features from each set of single cell features of the plurality of sets of single cell features.

Specifically, each set of single cell features may comprise the same features, i.e. the same number of features and the same type of features. Exemplarily, considering a plurality of timepoints comprising N timepoints {*t*₁, ..., *t_{N}*} and a plurality of samples comprising *L* samples {*S*₁, ...,*S_{L}*}, for each *i*-th live cell in each sample at each timepoint a set of *K* cell features $\left\{{F}_{1}^{i},…,{F}_{K}^{i}\right\}$ may be determined. For instance, if *P* live cells have been detected for the sample *S*₁, *P* sets $\left\{{F}_{1}^{1},…,{F}_{K}^{1}\right\} , … , \left\{{F}_{1}^{P},…,{F}_{K}^{P}\right\}$ of single cell features are determined for the sample *S*₁ at each timepoint.

The single cell features may be then combined to obtain sample cell features, which are cell features describing the sample as a whole. The corresponding cell features are identical single cell features that have been determined for different analyzed live cells. Continuing with the above example for sample *S*₁, exemplary corresponding single cell features are ${F}_{1}^{1} , … , {F}_{1}^{P}$. From *P* sets, one set of sample cell features $\left\{{F}_{1}^{{S}_{1}},…,{F}_{K}^{{S}_{1}}\right\}$ for sample *S*₁ is obtained for each timepoint. Since each set of single cell features comprises the same cell features, each set of sample cell features comprises the same sample cell features, albeit computed for different samples.

The method may determine a plurality of sets of sample cell features for each sample of the plurality of samples, namely as many as the timepoints. Thus, for *N* timepoints and *L* samples, the method may determine *N* x *L* sets of sample cell features.

There are various possibilities for combining the corresponding single cell features to obtain a sample cell feature. Exemplarily, a given sample cell feature may be the median, the arithmetic mean or the geometric mean of the plurality of corresponding single cell features. For instance, the sample cell feature ${F}_{1}^{{S}_{1}}$ may be the median of ${F}_{1}^{1} , … , {F}_{1}^{P}$*.*

In a particular example, determining the set of sample cell features may further comprise normalizing the combination of the corresponding single cell features. In other words, the method may comprise determining the set of sample cell features by combining corresponding single cell features and normalizing the combination of the corresponding single cell features.

For instance, the features of a negative control sample may be used for the normalization factor. Exemplarily, for each sample cell feature of the negative control sample, a mean µ and a standard deviation σ of said sample cell feature may be computed across all timepoints. Then, each sample cell feature *x* of a sample other than the negative control sample may be normalized to obtain a sample cell feature *z* as follows: $z = \frac{x - μ}{σ}$ by using corresponding sample cell features.

In a particular example, the method may further comprise visually outputting the determined cell features. For instance, a plot (e.g. a t-SNE plot) may be provided on a display to a user.

The method further comprises training at least one machine learning model to output at least one numerical value associated with the morphological profiling, wherein each input of the at least one machine learning model is derived from the cell features.

In other words, the method comprises using the determined cell features for the plurality of samples and the plurality of timepoints to provide inputs to the at least one machine learning model. Therefore, the at least one machine learning model is a time-dependent model, in view of the training involving a plurality of timepoints.

More specifically, the determined cell features for a given timepoint and a given sample may be used, in turn, to obtain a respective input for the at least one machine learning model. In other words, the method may comprise obtaining a plurality of inputs, wherein each input is derived from the cell features of a given sample of the plurality of samples at a given timepoint of the plurality of timepoints. Accordingly, the at least one machine learning model is trained over a plurality of samples and a plurality of timepoints.

Exemplarily, an input derived from the cell features for a given timepoint and a given sample may be a set of sample cell features, as discussed above.

As mentioned, when fed with an input, the at least one machine learning model is trained to output at least a numerical value associated with the morphological profiling. Morphological profiling involves identifying or predicting which effect (or, more specifically, which biochemical interaction), among a plurality of known effects, an unknown agent has on living cells. Thus, the at least one numerical value may provide an identification or prediction of a type of biochemical interaction. Therefore, the at least one numerical value associated with the morphological profiling may be a numerical value associated with the type of biochemical interaction.

Said otherwise, the at least one machine learning model may classify a biochemical interaction between an agent and live cells. Accordingly, the at least one numerical value may be associated with a type of biochemical interaction, in that the numerical value indicates the likelihood that said type of biochemical interaction occurs between the agent and the live cells.

In particular, the at least one machine learning model may be trained such that, once trained, it is configured to identify or predict whether a given biochemical interaction occurs in an unknown sample, wherein an unknown sample is a sample for which it is not known which kind of biochemical interaction, if at all, occurs between its cells and its agent.

When training, in combination with each input, a respective target output value may be provided to the at least one machine learning model, wherein the target output value is associated with known morphological profiling. The target output values drive the training (e.g. they are used for computing a loss function). Accordingly, training the at least one machine learning model may comprise assigning, to each input of the plurality of obtained inputs, a respective target output value. Each target output value may be based on known morphological profiling of the sample to which the input relates.

For instance, as target output value associated with an input of a given sample, a first value (such as 0) may be assigned to samples which are known not to exhibit a given biochemical interaction and a second, different value (such as 1) is assigned to samples which are known to exhibit the given biochemical interaction.

In the particular example in which the plurality of samples comprises the positive control sample and the negative control sample, the method may comprise obtaining a plurality of first inputs, wherein each first input is derived from the cell features of the negative control sample at a given timepoint of the plurality of timepoints, and obtaining a plurality of second inputs, wherein each second input is derived from the cell features of the positive control sample at a given timepoint of the plurality of timepoints.

In this case, training the at least one machine learning may comprise assigning to each first input of the plurality of first inputs a first value (e.g. 0) as target output value; and assigning to each second input of the plurality of second inputs a second value (e.g. 1) as target output value, the second value being different from the first value. As mentioned, exemplarily, each first input may be a set of sample cell features for the negative control sample and each second input may be a set of sample cell features for the positive control sample.

In examples in which the plurality of samples further comprises at least one reference sample, the target output value assigned to the at least one reference sample may also be the first value. Accordingly, the method may comprise obtaining a plurality of third inputs, wherein each third input is derived from the cell features of the reference control sample at a given timepoint of the plurality of timepoints, and training the at least one machine learning model may comprise assigning to each third input of the plurality of third inputs the first value (e.g. 0) as target output value.

Exemplarily, data from which the target output values can be derived (such as the known morphological profiling) may be provided by a user and/or retrieved from a computing source such as a database. For instance, a user may be prompted to categorize the samples as positive control samples, negative control samples and, optionally, reference samples. In another instance, the metadata of an image may comprise information about the agent of the sample captured in that image and the computing system may retrieve the corresponding morphological profiling (in particular, the biochemical reaction that the agent is configured to have with cells) from a database. Accordingly, the computing system may determine the target output values from these data and assign them to the at least one machine learning model when training.

Once trained, the at least one machine learning model can be used for an unknown sample. In particular, cell features may be determined for the unknown sample, in the same way as explained above. For each input derived from said cell features, the output is classification output value, i.e. a numerical value relative to the given biochemical interaction: a low value (e.g. lower than or equal to 0.5) indicates that the given biochemical interaction is unlikely to occur in the unknown sample, while a high value (e.g. greater than 0.5) indicates that the given biochemical interaction is likely to occur in the unknown sample.

Specifically, multiple inputs corresponding to multiple timepoints may be obtained for the unknown sample from the cell features (e.g. multiple sets of sample cell features). As explained above, since the machine learning model is also trained using inputs at plural timepoints, it is possible to obtain a time series of classification output values for the unknown sample. In other words, a time-dependent identification or prediction of a biochemical interaction can be obtained.

Exemplarily, a filtering method may be applied to the discrete time series of outputs to obtain an output curve for the unknown sample. An integral of the output curve may be calculated to provide a time-integrated classification value. Similarly to individual, discrete values, a low value (e.g. lower than or equal to a classification threshold) for the time-integrated classification value indicates that the given biochemical interaction is unlikely to occur in the unknown sample, while a high value (e.g. greater than a classification threshold) for the time-integrated classification value indicates that the given biochemical interaction is likely to occur in the unknown sample.

For instance, the classification threshold may be computed based on a benchmark negative control sample, wherein the benchmark negative control sample is a negative control sample that is not part of the samples used for training the at least one machine learning model. Thus, the benchmark negative control sample is not part of the plurality of samples imaged in the label-free (and, optionally, labeled) images described above. However, like the negative control sample, it contains cells and a negative control agent configured not to have any biochemical interaction with the cells. The classification threshold may be the time-integrated classification value for the benchmark negative control sample. Alternatively, a plurality of benchmark negative control samples may be used and the classification threshold may be the average of their respective time-integrated classification values or the average plus one or two standard deviations.

The output of the at least one machine learning model may be exemplarily used for the production of a drug, e.g. a cancer treatment drug. Indeed, a given chemical compound may be selected to advance in the drug development pipeline to the pre-clinical stage and/or for lead optimization based on the morphological profiling provided by the at least one machine learning model.

As mentioned, the at least one machine learning model is trained to output at least one numerical value associated with the morphological profiling, e.g. with a type of biochemical interaction. Exemplarily, the at least one machine learning model may be trained to output a plurality of numerical values for one given input, each numerical value associated with a different biochemical interaction. For instance, if the plurality of samples comprises a reference sample, the training may be repeated by assigning different target output values, e.g. by assigning the second value to the set of sample parameters of the reference sample and the first value to the remaining ones. In another instance, this could be achieved by repeating the steps of the method for a different plurality of samples comprising a different positive control sample.

In the case of a plurality of numerical values associated with respective different biochemical interactions, the biochemical interaction corresponding to the highest time-integrated classification value (optionally, as long as it is above the classification threshold) may be identified or predicted to be the biochemical interaction occurring in a given sample.

Exemplarily, the machine learning model may be an artificial neural network (ANN). In other examples, the machine learning model may by a partial least squares regression model.

ANNs belong to the common knowledge of the skilled person, nevertheless a short overview will be given in the following. Generally, an ANN comprises a plurality of artificial neurons, wherein each neuron is a propagation function that receives one or more inputs and combines them to produce an output, wherein the inputs have different weights. For example, the propagation function may be a sigmoid, so that, for inputs *x₁, x₂,* ..., *xₙ* having respective weights *w₁, w₂, ..., wₙ,* the output of a neuron is $\frac{1}{1 + exp \left(-{\sum }_{i = 1}^{n} {w}_{i} {x}_{i}\right)} .$

Optionally, the propagation function may include a bias term in the exponent of the exponential function.

The neurons in the ANN are organized in layers and the ANN comprises at least an input layer that receives a plurality of (initial) input values as external data and an output layer that generates one or more (final) output values. Optional layers between the input layer and output layer are called hidden layers, and the neurons in the hidden layers receive inputs from other neurons and provide the output to one or more other neurons. The ANN may have, at least initially, predetermined weights and biases. In the context of machine learning, the effect of training the ANN is an adjustment of the weights and, optionally, of the biases of the propagation functions of the single neurons.

In a particular example, the method may further comprise validating the at least one machine learning model.

According to the method described herein, live cells are used for morphological profiling. Since live cells provide a more accurate reflection of cell phenotype and since a plurality of timepoints is spanned, which captures the time evolution of the interactions between cells and agents (including transient states), the accuracy of the morphological profiling is improved. Furthermore, dead cells are not removed from a sample, which enables a measure of cytotoxicity.

In a particular example, the method may further comprise outputting the at least one machine learning model. Outputting may comprise storing the at least one machine learning model in a memory (e.g. on a local disk and/or in a server offsite), and/or sending the at least one machine learning model to one or more other computers.

In a particular example, the method may further comprise receiving a set of labeled images captured at the plurality of timepoints for the plurality of samples in the respective plurality of wells, wherein the labeled images are labeled with at least one non-perturbing live-cell-compatible dye; and determining the cell features may further comprise using the set of labeled images.

A non-perturbing dye is a substance that does not affect the cells, in particular it does not affect cell growth and cell morphology. A live-cell-compatible dye is a substance that does not cause cell death, in particular it does not require fixing or permeabilization to enter the cells. Exemplarily, the at least one non-perturbing live-cell-compatible dye may be a fluorescent dye.

Thus, similarly to the label-free images, the labeled images are such that the cells captured in the images comprise live cells. In other words, the labeled images have been obtained with techniques that do not kill cells. In particular, the labeled images have been obtained by dying the samples with the at least one non-perturbing live-cell-compatible dye. Accordingly, in this particular example, each sample may further comprise the at least one non-perturbing live-cell-compatible dye.

The at least one dye is configured to highlight one or more subcellular structures (e.g. organelles) of the cells. In particular, the at least one dye may be configured to highlight subcellular structures that are not identifiable in the label-free images.

A labeled image comprises at least one dyed region, wherein the at least one dyed region comprises at least one subcellular structure of a cell. Since the same subcellular structure(s) in the different cells are highlighted by the at least one dye, a labeled image particularly comprises a plurality of dyed regions. Typically, a given dye targets a specific subcellular structure of a cell, so that an image comprising a region highlighted by the given dye (e.g. of a given color) is labeled in that the specific subcellar structure is identified as such.

Similarly to the set of label-free images, the set of labeled images shows the plurality of samples contained in the respective plurality of wells. In particular, there is at least one labeled image for each sample and for each timepoint.

In this example, the method comprises determining, for each timepoint of the plurality of timepoints and for each sample of the plurality of samples, cell features for the live cells using the set of label-free images and the set of labeled images. In other words, cell features are extracted from the label-free images as well as from the labeled images. The cell features may be extracted from the label-free images and the labeled images individually or simultaneously. The cell features from different types of images may be concatenated.

For instance, in this case, following the example above, a set of sample cell features for sample *S*₁ at a given timepoint may be $\left\{{F}_{1 , LF}^{{S}_{1}},…,{F}_{K , LF}^{{S}_{1}},{F}_{1 , L}^{{S}_{1}},…,{F}_{M , L}^{{S}_{1}}\right\}$, wherein the subscript "LF" refers to sample cell features determined from the label-free images and the subscript "L" refers to sample cell features determined from the labeled images, wherein M cell features are extracted from the labeled images for each analyzed cell.

Optionally, the labeled images may have been obtained by adding a background suppression reagent to the samples, wherein the background suppression reagent is also non-perturbing and live-cell compatible. Thus, each sample may further comprise the background suppression reagent.

In this particular example, the determination of cell features is made using both label-free images and labeled images. Accordingly, the cell features provide a more comprehensive and more accurate characterization of the samples, which leads to a more accurate morphological profiling.

Exemplarily, the at least one non-perturbing live-cell-compatible dye may comprise: a first dye having an excitation spectrum in a first band of wavelengths, a second dye having an excitation spectrum in a second band of wavelengths, and a third dye having an excitation spectrum in a third band of wavelengths. In other words, a plurality of dyes is used when labeling the images. Exemplarily, the first dye may have an emission spectrum in a first range of wavelengths, a second dye may have an emission spectrum in a second range of wavelengths, and a third dye may have an emission spectrum in a third range of wavelengths.

In particular, each band of wavelengths may have an overlap with each of the other two bands of wavelengths that is lower than a predetermined or predeterminable threshold, e.g. lower than 5%. In this way, false positives may be reduced.

The bands of wavelengths may be selected based on the characteristics of an instrument used to capture the second images, e.g. based on the light sources.

For instance, the first band of wavelengths may be from about 453 nm to about 485 nm, the second band of wavelengths may be from about 546 nm to about 568 nm, and the third band of wavelengths may be from about 648 nm to about 674 nm. These wavelength bands refer to the excitation spectra of the dyes. The corresponding emission spectra may have the following ranges: a first range of wavelengths for the emission spectrum of the first dye may be from about 494 nm to about 533 nm and largely correspond to green light, a second range of wavelengths for the emission spectrum of the second dye may be from about 576 nm to about 639 nm and largely correspond to orange light, and a third range of wavelengths for the emission spectrum of the third dye may be from about 686 nm to about 756 nm and largely correspond to near infrared light.

Exemplarily, the first dye may be configured to highlight the endoplasmic reticulum, the second dye may be configured to highlight the mitochondria, and the third dye may be configured to highlight the actin.

In this particular example, there may be at least four images for each sample and for each timepoint, one label-free image and three labeled images in three different colors.

Using a plurality of dyes allows for tracking the behavior of multiple organelles, thus, providing a more detailed insight into the cell morphology and behavior, which leads to a more accurate morphological profiling.

In a particular example, the at least one machine learning model may comprise two machine learning models, specifically an early-time machine learning model and a late-time machine learning model. Training the early-time machine learning model may comprise providing inputs derived from cell features corresponding to timepoints that are within a first time window; and training the late-time machine learning model may comprise providing inputs derived from cell features corresponding to timepoints that are within a second time window.

The early-time machine learning model may be configured to output an early numerical value associated with the morphological profiling (e.g. with a type of biochemical interaction) and the late-time machine learning model may be configured to output a late numerical value associated with the morphological profiling (e.g. with the type of biochemical interaction).

Accordingly, when the machine learning models are applied to unknown samples, a first time series comprising a plurality of early numerical values and a second time series comprising a plurality of late numerical values may be obtained. An early time-integrated classification value may be obtained from the first time series and a late time-integrated classification value may be obtained from the second time series. The early time-integrated classification value and the late time-integrated classification value may be added to obtain a total time-integrated classification value relative to a sample.

The first time window is antecedent to the second time window, i.e. each timepoint in the first time window precedes each timepoint in the second time window. Exemplarily, the first time window and the second time window are separated by a threshold timepoint, which may be a median or an average of the plurality of timepoints. In this case, all the timepoints in the first time window precede the threshold timepoint and all the timepoints in the second time window follow the threshold timepoint.

The effect that an agent has on live cells may exhibit different properties at early stages and late stages of an assay. Thus, by training two different machine learning models with data separated in time, the behavior of the cells may be more accurately captured, which leads to a more accurate morphological profiling.

In a particular example, the method may further comprise creating a library of machine learning models for morphological profiling, each machine learning model being associated with a specific cell type or a specific combination of cell types.

Specifically, the steps of the method:
- receiving a set of label-free images captured at a plurality of timepoints for a plurality of samples in a respective plurality of wells, wherein each sample comprises cells and a respective agent;
- performing, on the set of label-free images, cell segmentation to detect at least part of the cells and cell classification to categorize the at least part of the cells as live or dead;
- determining, for each timepoint of the plurality of timepoints and for each sample of the plurality of samples, cell features for the live cells using at least the set of label-free images;
- training at least one machine learning model to output at least one numerical value associated with the morphological profiling, wherein each input of the at least one machine learning model is derived from the cell features;
may be collectively denoted as a model generating step.

Creating the library may comprise repeating the model generating step a plurality of times, wherein each time the model generating step is performed for cells belonging to a respective cell type of a plurality of cell types or belonging to a combination of cell types of a plurality of combinations of cell types. The cell types in the plurality of cell types are all different from each other. Similarly, the combinations of cell types in the plurality of combinations of cell types are all different from each other. Furthermore, the cells for which the model generating step is performed first, i.e. before repeating the model generating step, may be first cells, the first cells belonging to a first cell type or a first combination of cell types, and the plurality of cell types may not comprise the first cell type and the plurality of combinations of cell types may not comprise the first combination of cell types.

Optionally, the model generating step may comprise other features of the method described above.

Furthermore, depending on the samples, and, more specifically, on the agents present in the images used for training, a machine learning model may also be considered associated with a specific biochemical interaction or a set of specific biochemical interactions. Accordingly, a library may also be created to span different biochemical interactions, similarly to how the library described above spans over cell types (or combinations thereof).

Exemplarily, the library may span both cell types and biochemical interactions. Thus, the method may further comprise creating a library of machine learning models for morphological profiling, each machine learning model being associated with a specific cell type or a specific combination of cell types and being associated with a specific biochemical interactions or a set of specific biochemical interactions.

Another aspect of the present invention relates to a computer program product comprising computer-readable instructions, which, when executed by a computer, cause the computer to carry out the first computer-implemented method described herein.

Yet another aspect of the present invention relates to a computer system comprising at least one processing unit and at least one memory, wherein the computer system is configured to carry out the first computer-implemented method described herein.

A further aspect of the present invention relates to a system for performing morphological profiling. The system comprises:
- a vessel holder configured to hold a vessel comprising a plurality of wells containing a respective plurality of samples, wherein each sample comprises cells and a respective agent;
- an imaging apparatus configured to capture, at a plurality of timepoints, a set of label-free images of the plurality of samples;
- an incubator configured to accommodate the vessel holder and the imaging apparatus;
- a computer system comprising at least one processing unit and at least one memory, wherein the computer system is configured to:
   -- receive the set of label-free images;
   -- perform, on the set of label-free images, cell segmentation to detect at least part of the cells and cell classification to categorize the at least part of the cells as live or dead;
   -- determine, for each timepoint of the plurality of timepoints and for each sample of the plurality of samples, cell features for the live cells using at least the set of label-free images;
   -- train at least one machine learning model to output at least one numerical value associated with the morphological profiling, wherein each input of the at least one machine learning model is derived from the cell features.

In another words, the system comprises a vessel holder, an imaging apparatus, an incubator and a computer system according to the preceding aspect, namely configured to carry out the method according to the first aspect. Accordingly, the description relative to the first computer-implemented applies analogously to the system.

The vessel holder may comprise a plate onto which the vessel may be placed. A vessel is configured to contain samples, in particular cells exposed to various agents, and comprises a plurality of wells. The vessel holder may comprise one or more elements configured to keep the vessel in a fixed position, such as protrusions, grooves, clamps. In a particular example, the vessel holder may be a microplate holder configured to hold a microplate. The vessel holder may be removable from the system and/or could include removable inserts to facilitate holding a variety of different vessels.

The imaging apparatus may comprise at least one microscope. In particular, the same microscope may function as phase contrast microscope and fluorescence microscope. The imaging apparatus may comprise a first optical module for phase contrast image acquisition and a second optical module for fluorescence image acquisition, wherein the optical modules comprise one or more light sources, as described below. Furthermore, an imaging sensor may be shared by both optical modules.

The imaging apparatus may be in electrical communication with the computer system and may be controlled by the computer system. The computer system may control the imaging apparatus such that it captures images at a plurality of timepoints, e.g. every few hours (e.g. such as 2 hours) over the course of few days (e.g. such as 3 days).

The imaging apparatus may further comprise at least one light source and the imaging sensor. The at least one light source may comprise a phase lamp configured to provide light for phase contrast imaging. The imaging sensor may be configured to receive light from the at least one light source transmitted through and/or scattered by the samples.

The relative positioning between the imaging apparatus and the vessel holder is such that the imaging apparatus can capture images of the vessel being held by the vessel holder. In some examples, the position of the imaging apparatus relative to the vessel holder may be fixed. In other examples, the system may comprise a steering component configured to position the imaging apparatus relative to the vessel holder, and, specifically, to the vessel held by the vessel holder. In particular, in the case of a microplate comprising a plurality of wells, the imaging apparatus may be moved from one well to the other.

The steering component (e.g. a gantry) may be configured to control the location of the imaging apparatus in at least two directions, relative to the vessel, e.g. in order to facilitate imaging of a plurality of different samples within the vessel. The steering component may also be configured to control the location of the imaging apparatus in a third direction, toward and away from the vessel, e.g. in order to facilitate controlling the focus of images generated using the imaging apparatus. Additionally or alternatively, the imaging apparatus may include one or more actuators to control a focal distance of the imaging apparatus. The steering component may be in electrical communication with the computer system and may be controlled by the computer system.

The steering component may include elements configured to facilitate detection of the absolute and/or relative location of the imaging apparatus relative to the vessel (e.g., to particular well(s) of the vessel). For example, the steering component may include encoders, limit switches, and/or other location-sensing elements. Additionally or alternatively, the imaging apparatus or other elements of the system may be configured to detect fiducial marks or other features of the vessel and/or of the vessel holder in order to determine the absolute and/or relative location of the imaging apparatus relative to the vessel.

The system further comprises an incubator. The incubator is configured to control temperature, humidity, and/or other environmental parameters to facilitate culturing of live cell samples that can be imaged, in automated fashion, by the imaging apparatus.

The incubator is configured to accommodate the vessel holder, so that a vessel placed on the vessel holder is also accommodated within the incubator. Furthermore, the incubator is also configured to accommodate the imaging apparatus. By being positioned within the incubator, the imaging apparatus can image the samples without requiring the samples to be removed from the incubator, a process which could perturb the samples and modify their growth/response to applied experimental conditions. The computer system may be located outside the incubator.

In a particular example, the imaging apparatus may further comprise at least one light source configured to emit light for exciting at least one respective non-perturbing live-cell-compatible fluorescent dye, namely at least one fluorescence lamp. Accordingly, the imaging apparatus may comprise a phase lamp and at least one fluorescence lamp. The imaging sensor may be configured to receive the fluorescent light emitted by the dyed samples in response to excitation caused by the fluorescence lamp.

The imaging apparatus may be further configured to capture, at the plurality of timepoints, a set of labeled images of the plurality of samples, wherein the labeled images are labeled with the at least one non-perturbing live-cell-compatible fluorescent dye; and the computer system may be configured to determine the cell features further using the set of labeled images.

Exemplarily, the at least one light source may comprise: a first light source configured to emit light in a first band of wavelengths, a second light source configured to emit light in a second band of wavelengths, a third light source configured to emit light in a third band of wavelengths. The at least one non-perturbing live-cell-compatible fluorescent dye may comprise: a first dye having an excitation spectrum in the first band of wavelengths, a second dye having an excitation spectrum in the second band of wavelengths, a third dye having an excitation spectrum in the third band of wavelengths.

In other words, the three light sources may be configured to provide illumination in three respective bands of excitation wavelengths that correspond to respective fluorophores in the sample introduced by the dyes.

As already mentioned above, the first band of wavelengths may be from about 453 nm to about 485 nm, the second band of wavelengths may be from about 546 nm to about 568 nm, and the third band of wavelengths may be from about 648 nm to about 674 nm.

Another aspect of the invention relates to the use of the system according to the previous aspect to perform morphological profiling of at least one sample contained in a well of the plurality of wells of the vessel.

According to the first method described above, a machine learning model (or a pair of machine learning models) is trained to provide morphological profiling. In particular, the machine learning model(s) may be configured to provide morphological profiling for a given cell type or combination of cell types, as well as for one or more given biochemical interactions. As mentioned, different machine learning model(s) may be trained for respective different cell types and/or biochemical interactions, e.g. to create a library. The resulting, trained machine learning model(s) advantageously are ready-to-use for a user that would like to obtain a morphological profiling on their samples.

However, in some cases, the user may want to obtain a morphological profiling for samples with a cell type or cell type combination that was not specifically used for training and/or having biochemical interactions that were not considered when training. In these cases, the pre-trained model(s) resulting from the first method may not be optimal for an accurate morphological profiling.

An additional aspect of the present invention relates to a second computer-implemented method for morphological profiling. The second method comprises:
- receiving a set of label-free images captured at a plurality of timepoints for a plurality of samples in a respective plurality of wells, wherein each sample comprises cells and a respective agent, the plurality of samples comprising:
   -- at least one positive control sample comprising the cells and a positive control agent, wherein the positive control agent is configured to have a given biochemical interaction with the cells;
   -- at least one negative control sample comprising the cells and a negative control agent, wherein the negative control chemical compound is configured not to have any biochemical interaction with the cells;
   -- at least one sample of interest comprising the cells and an agent of interest;
- performing, on the set of label-free images, cell segmentation to detect at least part of the cells and cell classification to categorize the at least part of the cells as live or dead;
- prompting a user to categorize each of the plurality of samples as positive control sample, negative control sample or sample of interest;
- determining, for each timepoint of the plurality of timepoints and for each sample of the plurality of samples, cell features for the live cells using at least the set of label-free images;
- training at least one machine learning model to output at least one numerical value associated with the morphological profiling, wherein the inputs of the at least one machine learning model are derived from the cell features of the at least one positive control sample and the at least one negative control sample;
- providing, for the at least one sample of interest, a plurality of numerical values associated with the given biochemical interaction corresponding to the plurality of timepoints, using the at least one trained machine learning model.

The features and examples described for the first method apply analogously to the second method. The second method enables a user to train the at least one machine learning model for morphological profiling using their own samples, instead of having to rely on pre-trained machine learning model(s).

In particular, the plurality of samples for the second method comprises positive and negative control samples for training the at least one machine learning model as well as samples of interest, i.e. unknown samples, to which the at least one trained machine learning model can be applied for identifying whether the given biochemical interaction occurs.

Another aspect of the present invention relates to a computer program product comprising computer-readable instructions, which, when executed by a computer, cause the computer to carry out the second computer-implemented method described herein.

Yet another aspect of the present invention relates to a computer system comprising at least one processing unit and at least one memory, wherein the computer system is configured to carry out the second computer-implemented method described herein.

### Brief Description of the Drawings

Details of exemplary embodiments are set forth below with reference to the exemplary drawings. Other features will be apparent from the description, the drawings, and from the claims. It should be understood, however, that even though embodiments are separately described, single features of different embodiments may be combined to further embodiments.
Figure 1 shows a flow chart of an exemplary method for morphological profiling.
Figure 2 shows an exemplary time series of mechanism of action (MOA) classification.
Figure 3 shows a schematic representation of a cross-validation scheme.
Figure 4 shows an exemplary system comprising a vessel holder, an imaging apparatus and a computer system.
Figure 5 shows an exemplary computing environment.

### Detailed Description

In the following, a detailed description of examples will be given with reference to the drawings. It should be understood that various modifications to the examples may be made. Unless explicitly indicated otherwise, elements of one example may be combined and used in other examples to form new examples.

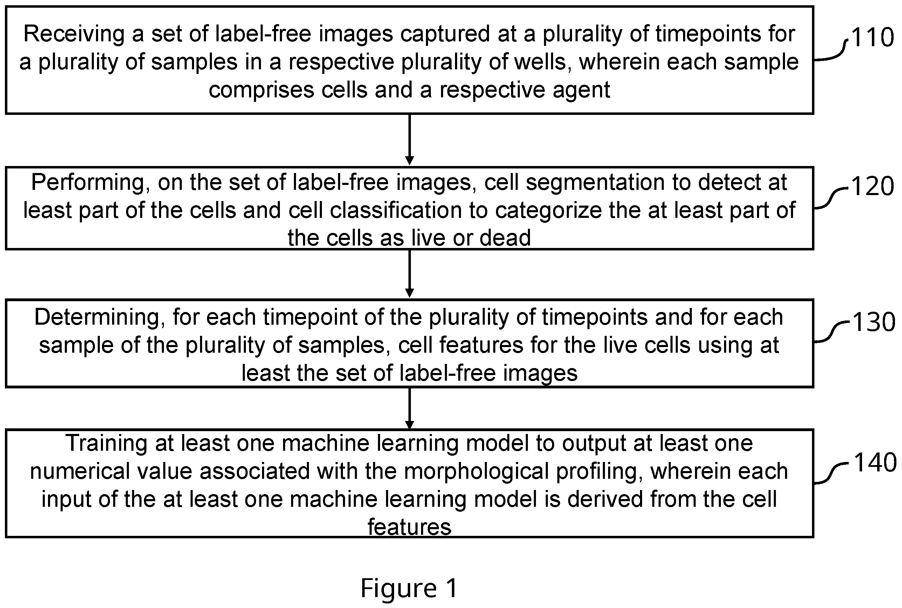

**Figure 1** shows a flow chart of an exemplary method for morphological profiling. The method involves a plurality of samples in a respective plurality of wells, wherein each sample comprises cells and a respective agent.

Prior to the beginning of the computer-implemented method, sample preparation and imaging take place. The plurality of wells is part of a microplate, such as a 384-well microplate. Each sample is contained in a respective well.

The microplate is prepared by inserting a plurality of agents in the respective plurality of wells. The cells in each sample are harvested from a culture vessel, such as a flask, and resuspended to desired density in cell culture medium, e.g. 750 cells per well (30 cells/ µl), then added to the agents. The cells may be from the cell lines A549 and U2-OS.

The plurality of agents may comprise a negative control agent configured not to have any effect on the cells, for instance DMSO. The plurality of agents further comprises a plurality of active agents, wherein each active agent has a defined MOA with the cells. The plurality of active agents corresponds to a set of MOAs, in that there is at least one active agent for each MOA, e.g. twelve active chemical compounds for each MOA. Exemplarily, the set of MOAs comprises AKT inhibition, HDAC inhibition, MAPK inhibition, CDK inhibition, PARP inhibition and TUB inhibition.

The chemical compounds for AKT inhibition are: 10-DEBC, AR-12, AZD5363, Buparlisib, CCT128930, GSK2110183, GSK690693, Ipatasertib, Miransertib, PI-103, Uprosertib, triciribine. The chemical compounds for CDK inhibition are: Abemaciclib (Verzenio), BMS-265246, DRF053-(R), LY2857785, PHA-793887, Palbociclib (librance), RGB-286638, Ribociclib (Kisqali), Roscovitine (Seliciclib, CYC202), TG-02, aminopurvalanol-a, purvalanol-a. The chemical compounds for HDAC inhibition are: Abexinostat, Chidamide, Droxinostat, M344, Pimelic Diphenylamide 106, Pyroxamide, RG2833, Ricolinostat, SBHA, Scriptaid, Tacedinaline, UF010. The chemical compounds for MAPK inhibition are: Binimetinib, Cobimetinib, Doramapimod, EO-1428, LY2228820, PH-797804, SB-239063, SB-242235, SKF-86002, TAK-715, Trametinib, Ulixertinib. The chemical compounds for PARP inhibition are: (20S)-Protopanaxadiol, AZD-2461, DR-2313, E7449, EB-47, IWR-1, Iniparib (BSI-201), ME0328, Niraparib, Rucaparib (phosphate), Talazoparib, Veliparib. The chemical compounds for TUB inhibition are: ALBENDAZOLE, Colchicine, Fenbendazole, Lexibulin, MEBENDAZOLE, Nocodazole, Paclitaxel, Vinblastine sulfate, Vincristine sulfate, Vinorelbine ditartrate, ixabepilone, parbendazole. Each compound (both negative and active) is replicated in multiple wells of the microplate. In some examples, all wells of a microplate are filled, while in other examples only some wells of the microplate are filled.

Optionally, one or more fluorescent dyes can be added to the cell culture medium, wherein the fluorescent dyes enter the cells and bind to their target subcellular structure. The dyes are provided as solution in DMSO, a small volume of this solution is added to the cell culture medium with a volume calculated to obtain a specific final concentration (for example, a 1:1000 dilution factor).

Specifically, dyes are chosen to be live-cell-compatible and non-perturbing. For instance, the following three dyes may be used: BODIPY-ER Tracker to label endoplasmic reticulum and emitting in the green fluorescence channel, MMP Reagent to label mitochondria and emitting in the orange fluorescence channel, and CellMask Deep Red Actin Stain to label actin and emitting in the near IR fluorescence channel. These fluorescence channels correspond e.g. to those in the Incucyte^{®} system by Sartorius. The overlap between these fluorescence channels is below an acceptability threshold, so that false positive signals are reduced or avoided.

Optionally, a fluorescence background suppressor can also be added to the cell culture medium, wherein the suppressor is also live-cell-compatible and non-perturbing. For example, maintaining the BODIPY-ER Tracker in the cell culture medium throughout an assay time period of three days, a strong fluorescence background may be observed, which could affect the visualization and quantification of the labelled cell components. The addition of Opti-Green, a non-perturbing background suppression reagent, improves the signal-to-noise ratio of the green and orange fluorescence channels.

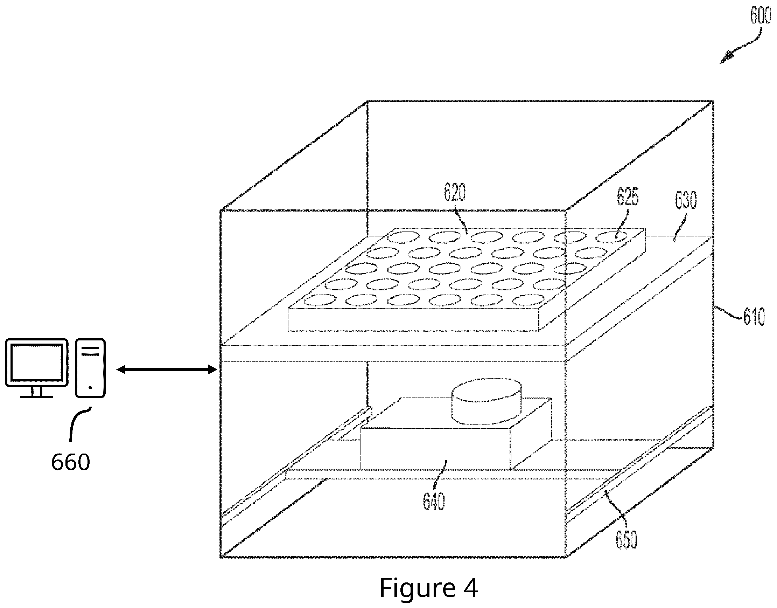

The microplate is centrifuged prior to imaging to align the cells at the bottom of the wells and then placed in an incubator of a system (as described below with reference to Figure 4) that comprises an imaging apparatus. The imaging apparatus collects data about the live cells using phase contrast imaging and, optionally, fluorescence imaging, e.g. at 20x magnification, at a plurality of timepoints, e.g. every two hours for three days, with a single image site per well. Phase-contrast images are label-free images. The method comprises at 110 receiving the set of label-free images captured at the plurality of timepoints for the plurality of samples. Optionally, as explained, the method may also comprise receiving a set of labeled images. The images may be received by a computer system from the imaging apparatus.

The method further comprises at 120 performing, on the set of label-free images, cell segmentation to detect at least part of the cells and cell classification to categorize the at least part of the cells as live or dead. The segmentation and classification are carried out using artificial intelligence-driven image analysis, e.g. using the Incucyte^{®} AI Cell Health Analysis Software Module by Sartorius.

The cell segmentation and cell classification are carried out on one label-free image at the time. A segmentation mask is obtained for each cell, together with a categorization of that cell as live or dead.

The method further comprises at 130 determining, for each timepoint of the plurality of timepoints and for each sample of the plurality of samples, cell features for the live cells using the set of label-free images, and, optionally, the set of labeled images.

A particular implementation of step 130 is as follows. Cell crops are created for each single live cell based on the segmentation masks. The segmentation masks are dilated by five pixels to make sure the cell boundary is included and all pixels outside the dilated mask are set to zero. The same mask is used to crop all channels available, if there is more than one, wherein the channels include the phase contrast channel and the three fluorescent channels. For instance, for each channel, single cell crops with the dimensions 3x224x224 (3 being the same channel stacked) are created with zero padding to mimic an RGB image. Cells larger than 224 in any dimension or dead are excluded from the analysis.

These exemplary dimensions for the single cell crops are determined based on the machine learning model used for extracting the cell features, DINOv2-ViT-B16 (https://arxiv.org/abs/2304.07193) which expects images with these dimensions as input for feature extraction. Other models may be used.

The zero-padded cell crops are fed into the pre-trained DINOv2-ViT-B16 model, which extracts 768 single cell features. The same features are extracted across all live cells, time points and wells, for each channel individually.

Then, single cell features from the same well and time point are consolidated to obtain sample cell features that describe the overall status at that specific well and time point. A sample cell feature is computed as the median of all corresponding single cell features of a given well and at a given timepoint. Thus, for each sample and each timepoint, a set of 768 sample cell features is determined. If more than one channel is used, sample cell features from all channels are concatenated to form a row-vector (for each well and time-point) suitable as input for the at least one machine learning model described below.

Each sample cell feature *x* is subsequently individually scaled using a z-score calculated from the negative control chemical compounds (DMSO) on the microplate. This is done for all time points simultaneously, i.e. *µ* and *σ* are the mean and standard deviation of negative controls across the full time series for each feature: $z = \frac{x - μ}{σ}$

The method further comprises at 140 training at least one machine learning model to output at least one numerical value associated with the morphological profiling, wherein each input of the at least one machine learning model is derived from the cell features. The at least one machine learning model identifies MOA types based on the sample cell features.

A particular implementation of step 140 is as follows. Two machine learning models are trained, an early-time machine learning model and a late-time machine learning model. The early-time machine learning model is trained using data relative to a first time window (e.g. 6-14 hours), while the late-time machine learning model is trained using data relative to a second time window (e.g. 46-54 hours).

Each model architecture is identical and it is, for example, a neural network. The neural network takes a sample cell features vector with 768 features and then has two hidden layers, consisting of 512 and 256 neurons, respectively. The network uses LeakyReLU activation functions in the hidden layers, and a dropout rate of 0.5 to reduce overfitting. The output layer of the network has dimensions corresponding to the number of MOAs in the set of MOAs, i.e. six for the example discussed above, and no activation function. The model uses L1 Loss and the AdamW optimizer with a learning rate of 0.0001. Instead of a neural network, other models like Partial Least Squares (PLS) or Orthogonal-PLS (OPLS) may also work well.

When training each machine learning model, pairs of input-output are provided. In particular, for each vector of sample cell features as determined at 130 that is provided as input, a vector of target output values is provided as output, wherein the dimension of the vector corresponds to the number of MOAs in the set of MOAs.

For the sets of sample cell features associated with the negative control samples, i.e. the sample containing the negative control chemical compound, the vector of target output values is a null vector.

For the sets of sample cell features associated with the active samples, i.e. the samples containing the active chemical compounds, the vector of target output values comprises a 1 and the rest of the target output values are 0s. Specifically, each active sample is a positive control sample for the MOA occurring between its cells and its chemical compound, so that a 1 is assigned to the target output value corresponding to said MOA. At the same time, each active sample is a reference sample for the MOAs not occurring between its cells and its chemical compound, so that a 0 is assigned to the target output values corresponding to said MOAs.

For instance, if the vectors of target output values are in an ordered correspondence with the six inhibition MOAs {AKT, HDAC, MAPK, CDK, PARP, TUB}, an input set relative to an active sample for which it is known that the active chemical compound inhibits AKT in the cells is assigned to a vector of target output values {1, 0, 0, 0, 0, 0}. Accordingly, each machine learning model is trained to output one classification value for each MOA type, namely a vector of classification output values. A low value (close to zero) indicates that the interaction between the chemical compound and the cells in a sample displays low similarity with the respective MOA, while a higher value indicates higher similarity with the MOA. Since there are two machine learning models and six MOAs, for every timepoint there are twelve classification output values.

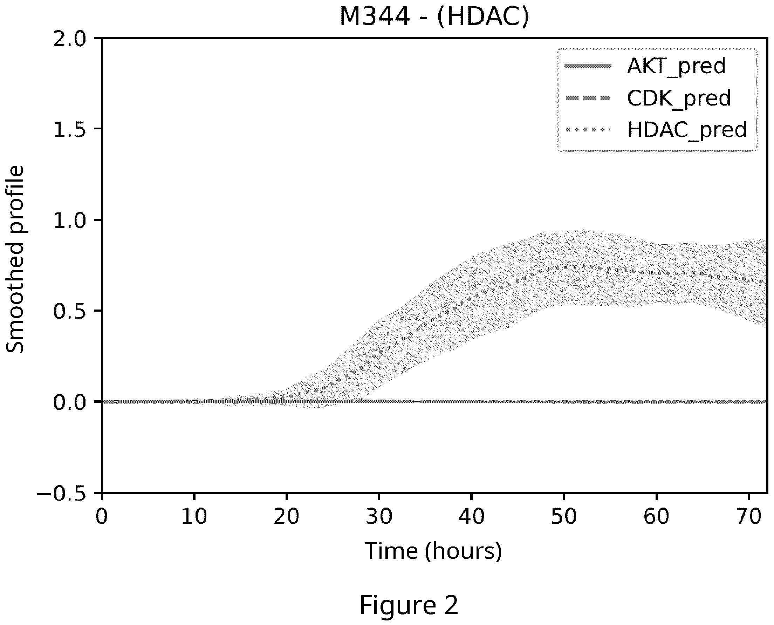

The machine learning models are trained on data spanning a plurality of timepoints, hence they also are configured to provide, for each MOA, classification output values spanning a plurality of timepoints, when provided with the corresponding inputs. The time series of the classification output values for each MOA is smoothed using the exponential weighted moving average. The smoothed time series data results in a dynamic profile that can be plotted over time. **Figure 2** shows an example of such smoothed profiles, wherein the HDAC inhibition profile is the one that significantly differs from zero.

For each MOA, a first integral of the smoothed classification output values from the early-time machine learning model and a second integral of the smoothed classification output values from the late-time machine learning model are computed. The sum of these two integrals provides a total time-integrated classification value, which serves as a metric for classifying each chemical compound. The MOA with the highest time-integrated classification value is designated as the identified MOA for the sample, provided it is greater than a respective classification threshold.

The classification threshold for a given MOA is computed from the total time-integrated classification value obtained for that MOA from the machine learning models for negative control samples that were not part of the training data. Thus, the classification threshold varies across different MOA types. Considering a plurality of negative control samples, the classification threshold is defined as the average plus two standard deviations. The use of a threshold classification reduces the number of false positives.

To evaluate the effectiveness of the machine learning models trained according to the method of **Figure 1****,** a cross-validation is performed and the accuracy is compared to that of a single timepoint analysis.

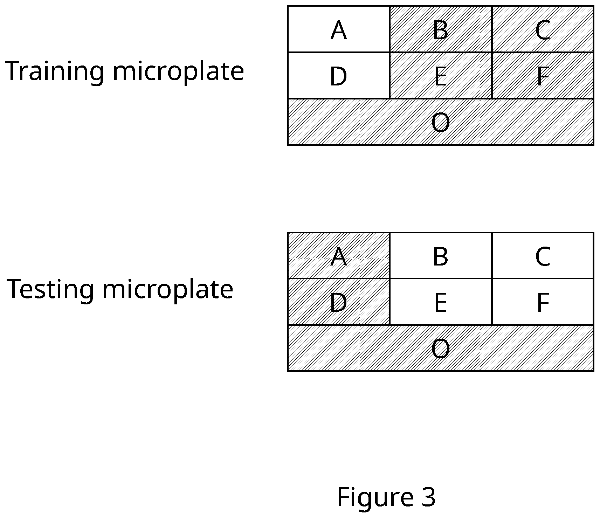

**Figure 3** shows a schematic representation of a cross-validation scheme. One microplate is a training microplate, the images of which are used to train the machine learning models according to the method of **Figure 1**. The other microplate is a testing microplate, the images of which are used to apply the trained machine learning models, in order to obtain time-integrated classification values.

The cross-validation is explained with reference to an example in which there are two types of MOA, type 1 and type 2, however the same principles apply to the set of six MOAs discussed above. Indeed, in general, the cross-validation involves excluding one compound from each MOA and training the models using the remaining data.

In the example of **Figure 3**, both microplates comprise compounds A, B and C, which are known to exhibit an MOA of type 1, compounds D, E and F, which are known to exhibit an MOA of type 2, and negative control compounds, represented by the letter O. All the compounds may be distributed across multiple wells.

For the training phase, images from the compounds B, C, E, F and O from the training microplate are used. Sets of sample cell features are determined for a plurality of timepoints and fed to the early-time machine learning model as well as the late-time machine learning model. The set of target output values for the inputs relative to compounds B and C is {1, 0} the set of target output values for the inputs relative to compounds E and F is {0, 1} and the set of target output values for the inputs relative to compound O is {0, 0}.

Having been trained on a subset of compound images for each MOA, the model performance is evaluated by applying the machine learning models to compounds not previously "seen" by the models on a microplate not previously "seen" by the models, namely compounds A and D of the testing microplate.

For each timepoint of the plurality of timepoints, a vector of classification output values for MOA type 1 and MOA type 2 is obtained from each machine learning model, totaling four classification output values per timepoint. The early-time time series and the late-time time series are smoothed using a filtering method such as EWMA, then the partial time-integrated classification values are computed and finally the total time-integrated classification values. Each of the compounds A and D has two total time-integrated classification values, one for MOA type 1 and one for MOA type 2. The classification threshold for each MOA type is determined by applying the machine learning models to O in the testing microplate.

The accuracy of the machine learning models describes the ability to identify the correct MOA for an agent, e.g. a chemical compound, previously unseen. By testing on unseen but known chemical compounds (i.e. chemical compounds for which the MOA is known), such as A and D in the example above, the accuracy can be computed.

The cross-validation approach explained with reference to Figure 3 is applied to the set of six different MOAs described above, with twelve different compounds, for cell lines A549 and U2OS. For the comparison with a single timepoint approach, a machine learning model with the same architecture as that of the early-time and late-time models is trained on images from a single timepoint (the 48-hour timepoint) and then the same cross-validation scheme is used.

The table below contains accuracy values for different approaches for the two cell lines. The first column shows the accuracy values for a case in which one machine learning model was trained only on phase-contrast images from a single timepoint. The second column shows the accuracy values for a case in which one machine learning model was trained only on fluorescence images from a single timepoint. The third column shows the accuracy values for a case in which one machine learning model was trained using both phase-contrast and fluorescence images from a single timepoint. The fourth column shows the accuracy values for a case in which two machine learning models were trained only on phase-contrast images from a time series. The fifth column shows the accuracy values for a case in which two machine learning models were trained only on fluorescence images from a time series. The sixth column shows the accuracy values for a case in which two machine learning models were trained using both phase-contrast and fluorescence images from a time series.

| Cell Line | Single timepoint | | | Time series | | |
|---|---|---|---|---|---|---|
| | Phase-contrast only | Fluoresce nce only | Phase-contrast and fluorescence combined | Phase-contrast only | Fluorescence only | Phase-contrast and fluorescence combined |
| A549 | 0.600 | 0.639 | 0.679 | 0.786 | 0.783 | 0.790 |
| U2OS | 0.488 | 0.518 | 0.581 | 0.619 | 0.656 | 0.720 |

It can be seen that the accuracy of models trained over a time series is always greater than the accuracy of a respective model trained over a single timepoint with the same type of images. Furthermore, the combination of phase-contrast and fluorescence images leads to a greater accuracy with respect to a case in which only one type of images is used.

**Figure 4** shows an exemplary system 600 comprising a vessel holder 630, an imaging apparatus 640 and a computer system 660. The system 600 includes an incubator 610 into which other elements of the system 600 are accommodated. The system 600 includes a microplate 620 that is removably placed within a vessel holder 630. The system 600 additionally includes a steering component 650 configured to position an imaging apparatus 640 relative to the microplate 620 such that the imaging apparatus 640 can operate to generate images of the contents of individual wells of the microplate 620 (e.g., the example well 625). Furthermore, the system 600 includes a computer system 660 configured to carry out the method of **Figure 1****.**

The imaging apparatus 640 can include one or more microscopes, one or more illumination sources, one or more optical filters, and/or other elements configured to facilitate imaging samples contained within the microplate 620. In particular, the imaging apparatus 640 may comprise a phase contrast microscope and a fluorescence microscope, as well as a phase lamp configured to provide light for phase contrast imaging, three fluorescence lamps configured to provide light that excites respective fluorescent dyes in the orange, green and near IR channels and an imaging sensor configured to receive the fluorescent light emitted by the dyed samples and the light from the phase lamp transmitted through and/or scattered by the samples.

In some examples, the imaging apparatus 640 includes elements disposed on both sides of the microplate 620. In such examples, elements on both sides of the microplate 620 may be coupled to respective different gantries, to the same gantry, and/or elements on one side of the microplate 620 may not be movable relative to the microplate 620.

The steering component 650 is coupled to the imaging apparatus 640 and is configured to control the location of the imaging apparatus 640 in at least two directions relative to the microplate 620, in order to facilitate imaging of a plurality of different samples within the microplate 620. The steering component 650 may also be configured to control the location of the imaging apparatus 640 in a third direction, toward and away from the microplate 620, in order to facilitate controlling the focus of images generated using the imaging apparatus 640 and/or to control a depth of material, within the microplate 620, that can be imaged using the imaging apparatus 640. Additionally or alternatively, the imaging apparatus 640 may include one or more actuators to control a focal distance of the imaging apparatus 640.

The steering component 650 may include elements configured to facilitate detection of the absolute and/or relative location of the imaging apparatus 640 relative to the sample container 620 (e.g., to particular well(s) of the microplate 620). For example, the steering component 650 may include encoders, limit switches, and/or other location-sensing elements. Additionally or alternatively, the imaging apparatus 640 or other elements of the system may be configured to detect fiducial marks or other features of the microplate 620 and/or of the vessel holder 630 in order to determine the absolute and/or relative location of the imaging apparatus 640 relative to the microplate 620.

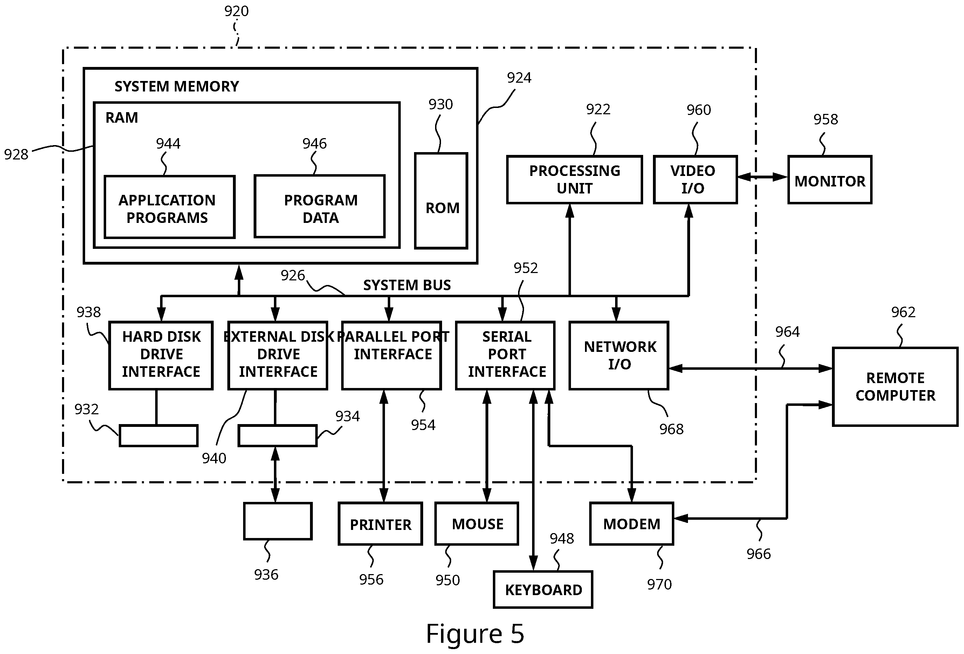

The computer system 660 is connected to other elements of the system 600, e.g. the imaging apparatus 640 and the steering component 650, e.g., connected via a direct wired or wireless connection, via a local network, and/or via a secured connection over the internet. Specifically, the computer system 660 may be configured as described herein with respect to **Figure 5** below.

**Figure 5** shows an exemplary system for implementing the invention including a general-purpose computing device in the form of a conventional computing environment 920 (e.g. a personal computer). The conventional computing environment includes at least one processing unit 922, a system memory 924, and a system bus 926. The system bus couples various system components including the system memory 924 to the at least one processing unit 922.

The at least one processing unit 922 may perform arithmetic, logic and/or control operations by accessing the system memory 924. The at least one processing unit 922 may comprise only a central processing unit (CPU), or it may also comprise a graphics processing unit (GPU), which is designed for digital image processing but is also suitable to perform non-graphic calculations. A CPU may be optimized for sequential processing, while a GPU may be optimized for parallel processing.

The system memory 924 may store information and/or instructions for use in combination with the at least one processing unit 922. The system memory 924 may include volatile and non-volatile memory, such as a random access memory (RAM) 928 and a read only memory (ROM) 930.

A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the methods for morphological profiling, as described above. The relevant data may be organized in a database, for example a relational database management system or an object-oriented database management system.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in **Figure 1****.**

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the at least one processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the at least one processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. **Figure 5** depicts the computer environment networked with remote computer 962. The remote computer 962 may be another computing environment such as a server, a router, a network PC, a peer device or other common network node, and may include many or all of the elements described above relative to the computing environment 920. The logical connections depicted in **Figure 5** include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore, other data relevant to the methods for morphological profiling (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the methods for morphological profiling.

## Claims

1. A computer-implemented method for performing morphological profiling, the method comprising:
- receiving a set of label-free images captured at a plurality of timepoints for a plurality of samples in a respective plurality of wells, wherein each sample comprises cells and a respective agent;
- performing, on the set of label-free images, cell segmentation to detect at least part of the cells and cell classification to categorize the at least part of the cells as live or dead;
- determining, for each timepoint of the plurality of timepoints and for each sample of the plurality of samples, cell features for the live cells using at least the set of label-free images;
- training at least one machine learning model to output at least one numerical value associated with the morphological profiling, wherein each input of the at least one machine learning model is derived from the cell features.

2. The computer-implemented method of claim 1, wherein:
the plurality of samples comprises:
a positive control sample comprising the cells and a positive control agent, wherein the positive control agent is configured to have a given biochemical interaction with the cells, and
a negative control sample comprising the cells and a negative control agent, wherein the negative control agent is configured not to have any biochemical interaction with the cells;
the method further comprises:
obtaining a plurality of first inputs, wherein each first input is derived from the cell features of the negative control sample at a given timepoint of the plurality of timepoints, and
obtaining a plurality of second inputs, wherein each second input is derived from the cell features of the positive control sample at a given timepoint of the plurality of timepoints; and
training the at least one machine learning comprises:
assigning to each first input of the plurality of first inputs a first value as target output value, and
assigning to each second input of the plurality of second inputs a second value as target output value, the second value being different from the first value.

3. The computer-implemented method of any one of the preceding claims, further comprising:
receiving a set of labeled images captured at the plurality of timepoints for the plurality of samples in the respective plurality of wells, wherein the labeled images are labeled with at least one non-perturbing live-cell-compatible dye; and
wherein determining the cell features further comprises using the set of labeled images.

4. The computer-implemented method of claim 3, wherein the at least one non-perturbing live-cell-compatible dye comprises:
a first dye having an excitation spectrum in a first band of wavelengths,
a second dye having an excitation spectrum in a second band of wavelengths, and
a third dye having an excitation spectrum in a third band of wavelengths.

5. The computer-implemented method of any one of the preceding claims, wherein:
the at least one machine learning model comprises an early-time machine learning model and a late-time machine learning model;
training the early-time machine learning model comprises providing inputs derived from cell features corresponding to timepoints that are within a first time window; and
training the late-time machine learning model comprises providing inputs derived from cell features corresponding to timepoints that are within a second time window.

6. The computer-implemented method of any one of the preceding claims, further comprising:
creating a library of machine learning models for morphological profiling, each machine learning model being associated with a specific cell type or a specific combination of cell types.

7. A computer-implemented method for performing morphological profiling, the method comprising:
- receiving a set of label-free images captured at a plurality of timepoints for a plurality of samples in a respective plurality of wells, wherein each sample comprises cells and a respective agent, the plurality of samples comprising:
-- at least one positive control sample comprising the cells and a positive control agent, wherein the positive control agent is configured to have a given biochemical interaction with the cells;
-- at least one negative control sample comprising the cells and a negative control agent, wherein the negative control agent is configured not to have any biochemical interaction with the cells;
-- at least one sample of interest comprising the cells and a agent of interest;
- performing, on the set of label-free images, cell segmentation to detect at least part of the cells and cell classification to categorize the at least part of the cells as live or dead;
- prompting a user to categorize each of the plurality of samples as positive control sample, negative control sample or sample of interest;
- determining, for each timepoint of the plurality of timepoints and for each sample of the plurality of samples, cell features for the live cells using at least the set of label-free images;
- training at least one machine learning model to output at least one numerical value associated with the morphological profiling, wherein the inputs of the at least one machine learning model are derived from the cell features of the at least one positive control sample and the at least one negative control sample;
- providing, for the at least one sample of interest, a plurality of numerical values associated with the given biochemical interaction corresponding to the plurality of timepoints, using the at least one trained machine learning model.

8. A computer program product comprising computer-readable instructions, which, when executed by a computer, cause the computer to carry out the method of any one of the preceding claims.

9. A computer system comprising at least one processing unit and at least one memory, wherein the computer system is configured to carry out the method of any one of claims 1 to 7.

10. A system for performing morphological profiling, the system comprising:
- a vessel holder configured to hold a vessel comprising a plurality of wells containing a respective plurality of samples, wherein each sample comprises cells and a respective agent;
- an imaging apparatus configured to capture, at a plurality of timepoints, a set of label-free images of the plurality of samples;
- an incubator configured to accommodate the vessel holder and the imaging apparatus;
- a computer system comprising at least one processing unit and at least one memory, wherein the computer system is configured to:
-- receive the set of label-free images;
-- perform, on the set of label-free images, cell segmentation to detect at least part of the cells and cell classification to categorize the at least part of the cells as live or dead;
-- determine, for each timepoint of the plurality of timepoints and for each sample of the plurality of samples, cell features for the live cells using at least the set of label-free images;
-- train at least one machine learning model to output at least one numerical value associated with the morphological profiling, wherein each input of the at least one machine learning model is derived from the cell features.

11. The system of claim 10, wherein:
the plurality of samples comprises:
a positive control sample comprising the cells and a positive control agent, wherein the positive control agent is configured to have a given biochemical interaction with the cells, and
a negative control sample comprising the cells and a negative control agent, wherein the negative control agent is configured not to have any biochemical interaction with the cells;
the computer system is further configured to:
obtain a plurality of first inputs, wherein each first input is derived from the cell features of the negative control sample at a given timepoint of the plurality of timepoints, and
obtain a plurality of second inputs, wherein each second input is derived from the cell features of the positive control sample at a given timepoint of the plurality of timepoints; and
the computer system is configured to train the at least one machine learning by:
assigning to each first input of the plurality of first inputs a first value as target output value, and
assigning to each second input of the plurality of second inputs a second value as target output value, the second value being different from the first value.

12. The system of claim 10 or 11, wherein:
the imaging apparatus comprises at least one light source configured to emit light for exciting at least one respective non-perturbing live-cell-compatible fluorescent dye;
the imaging apparatus is further configured to capture, at the plurality of timepoints, a set of labeled images of the plurality of samples, wherein the labeled images are labeled with the at least one non-perturbing live-cell-compatible fluorescent dye; and
the computer system is configured to determine the cell features further using the set of labeled images.

13. The system of claim 12, wherein:
the at least one light source comprises:
a first light source configured to emit light in a first band of wavelengths,
a second light source configured to emit light in a second band of wavelengths,
a third light source configured to emit light in a third band of wavelengths; and
the at least one non-perturbing live-cell-compatible fluorescent dye comprises:
a first dye having an excitation spectrum in the first band of wavelengths,
a second dye having an excitation spectrum in the second band of wavelengths,
a third dye having an excitation spectrum in the third band of wavelengths.

14. The system of any one of claims 10 to 13, wherein:
the at least one machine learning model comprises an early-time machine learning model and a late-time machine learning model;
the computer system is configured to train the early-time machine learning model by providing inputs derived from cell features corresponding to timepoints that are within a first time window; and
the computer system is configured to train the late-time machine learning model by providing inputs derived from cell features corresponding to timepoints that are within a second time window.

15. Use of a system according to any one of claims 10 to 14 to perform morphological profiling of at least one sample contained in a well of the plurality of wells of the vessel.

## Amended claims

### Amended claims in accordance with Rule 137(2) EPC.

1. A computer-implemented method for performing morphological profiling, the method comprising:
- receiving (110) a set of label-free images captured at a plurality of timepoints for a plurality of samples in a respective plurality of wells, wherein each sample comprises cells and a respective agent;
- performing (120), on the set of label-free images, cell segmentation to detect at least part of the cells and cell classification to categorize the at least part of the cells as live or dead;
- determining (130), for each timepoint of the plurality of timepoints and for each sample of the plurality of samples, cell features for the live cells using at least the set of label-free images;
- training (140) at least one machine learning model to output at least one numerical value associated with the morphological profiling, wherein each input of the at least one machine learning model is derived from the cell features, wherein the at least one numerical value provides an identification or prediction of a type of biochemical interaction.

2. The computer-implemented method of claim 1, wherein:
the plurality of samples comprises:
a positive control sample comprising the cells and a positive control agent, wherein the positive control agent is configured to have a given biochemical interaction with the cells, and
a negative control sample comprising the cells and a negative control agent, wherein the negative control agent is configured not to have any biochemical interaction with the cells;
the method further comprises:
obtaining a plurality of first inputs, wherein each first input is derived from the cell features of the negative control sample at a given timepoint of the plurality of timepoints, and
obtaining a plurality of second inputs, wherein each second input is derived from the cell features of the positive control sample at a given timepoint of the plurality of timepoints; and
training the at least one machine learning comprises:
assigning to each first input of the plurality of first inputs a first value as target output value, and
assigning to each second input of the plurality of second inputs a second value as target output value, the second value being different from the first value.

3. The computer-implemented method of any one of the preceding claims, further comprising:
receiving a set of labeled images captured at the plurality of timepoints for the plurality of samples in the respective plurality of wells, wherein the labeled images are labeled with at least one non-perturbing live-cell-compatible dye; and
wherein determining the cell features further comprises using the set of labeled images.

4. The computer-implemented method of claim 3, wherein the at least one non-perturbing live-cell-compatible dye comprises:
a first dye having an excitation spectrum in a first band of wavelengths,
a second dye having an excitation spectrum in a second band of wavelengths, and
a third dye having an excitation spectrum in a third band of wavelengths.

5. The computer-implemented method of any one of the preceding claims, wherein:
the at least one machine learning model comprises an early-time machine learning model and a late-time machine learning model;
training the early-time machine learning model comprises providing inputs derived from cell features corresponding to timepoints that are within a first time window; and
training the late-time machine learning model comprises providing inputs derived from cell features corresponding to timepoints that are within a second time window.

6. The computer-implemented method of any one of the preceding claims, further comprising:
creating a library of machine learning models for morphological profiling, each machine learning model being associated with a specific cell type or a specific combination of cell types.

7. A computer-implemented method for performing morphological profiling, the method comprising:
- receiving a set of label-free images captured at a plurality of timepoints for a plurality of samples in a respective plurality of wells, wherein each sample comprises cells and a respective agent, the plurality of samples comprising:
-- at least one positive control sample comprising the cells and a positive control agent, wherein the positive control agent is configured to have a given biochemical interaction with the cells;
-- at least one negative control sample comprising the cells and a negative control agent, wherein the negative control agent is configured not to have any biochemical interaction with the cells;
-- at least one sample of interest comprising the cells and a agent of interest;
- performing, on the set of label-free images, cell segmentation to detect at least part of the cells and cell classification to categorize the at least part of the cells as live or dead;
- prompting a user to categorize each of the plurality of samples as positive control sample, negative control sample or sample of interest;
- determining, for each timepoint of the plurality of timepoints and for each sample of the plurality of samples, cell features for the live cells using at least the set of label-free images;
- training at least one machine learning model to output at least one numerical value associated with the morphological profiling, wherein the inputs of the at least one machine learning model are derived from the cell features of the at least one positive control sample and the at least one negative control sample;
- providing, for the at least one sample of interest, a plurality of numerical values associated with the given biochemical interaction corresponding to the plurality of timepoints, using the at least one trained machine learning model.

8. A computer program product comprising computer-readable instructions, which, when executed by a computer, cause the computer to carry out the method of any one of the preceding claims.

9. A computer system comprising at least one processing unit and at least one memory, wherein the computer system is configured to carry out the method of any one of claims 1 to 7.

10. A system (600) for performing morphological profiling, the system comprising:
- a vessel holder (630) configured to hold a vessel comprising a plurality of wells containing a respective plurality of samples, wherein each sample comprises cells and a respective agent;
- an imaging apparatus (640) configured to capture, at a plurality of timepoints, a set of label-free images of the plurality of samples;
- an incubator (610) configured to accommodate the vessel holder (630) and the imaging apparatus (640);
- a computer system (660) comprising at least one processing unit and at least one memory,
wherein the computer system (660) is configured to:
-- receive (110) the set of label-free images;
-- perform (120), on the set of label-free images, cell segmentation to detect at least part of the cells and cell classification to categorize the at least part of the cells as live or dead;
-- determine (130), for each timepoint of the plurality of timepoints and for each sample of the plurality of samples, cell features for the live cells using at least the set of label-free images;
-- train (140) at least one machine learning model to output at least one numerical value associated with the morphological profiling, wherein each input of the at least one machine learning model is derived from the cell features, wherein the at least one numerical value provides an identification or prediction of a type of biochemical interaction.

11. The system of claim 10, wherein:
the plurality of samples comprises:
a positive control sample comprising the cells and a positive control agent, wherein the positive control agent is configured to have a given biochemical interaction with the cells, and
a negative control sample comprising the cells and a negative control agent, wherein the negative control agent is configured not to have any biochemical interaction with the cells;
the computer system is further configured to:
obtain a plurality of first inputs, wherein each first input is derived from the cell features of the negative control sample at a given timepoint of the plurality of timepoints, and
obtain a plurality of second inputs, wherein each second input is derived from the cell features of the positive control sample at a given timepoint of the plurality of timepoints; and
the computer system (660) is configured to train the at least one machine learning by: assigning to each first input of the plurality of first inputs a first value as target output value, and
assigning to each second input of the plurality of second inputs a second value as target output value, the second value being different from the first value.

12. The system of claim 10 or 11, wherein:
the imaging apparatus (640) comprises at least one light source configured to emit light for exciting at least one respective non-perturbing live-cell-compatible fluorescent dye;
the imaging apparatus (640) is further configured to capture, at the plurality of timepoints, a set of labeled images of the plurality of samples, wherein the labeled images are labeled with the at least one non-perturbing live-cell-compatible fluorescent dye; and
the computer system (660) is configured to determine the cell features further using the set of labeled images.

13. The system of claim 12, wherein:
the at least one light source comprises:
a first light source configured to emit light in a first band of wavelengths,
a second light source configured to emit light in a second band of wavelengths,
a third light source configured to emit light in a third band of wavelengths; and
the at least one non-perturbing live-cell-compatible fluorescent dye comprises:
a first dye having an excitation spectrum in the first band of wavelengths,
a second dye having an excitation spectrum in the second band of wavelengths,
a third dye having an excitation spectrum in the third band of wavelengths.

14. The system of any one of claims 10 to 13, wherein:
the at least one machine learning model comprises an early-time machine learning model and a late-time machine learning model;
the computer system (660) is configured to train the early-time machine learning model by providing inputs derived from cell features corresponding to timepoints that are within a first time window; and
the computer system (660) is configured to train the late-time machine learning model by providing inputs derived from cell features corresponding to timepoints that are within a second time window.

15. Use of a system (600) according to any one of claims 10 to 14 to perform morphological profiling of at least one sample contained in a well of the plurality of wells of the vessel.
